# EUROPEAN PATENT APPLICATION

(11) **EP 4 586 375 A1**
(43) Date of publication of application: **16.07.2025**
(21) Application number: 23862815.0
(22) Date of filing: 26.07.2023
(51) Int. Cl.: H01M 50/184, H01M 50/107, H01M 50/152, H01M 50/167, H01M 50/586, H01M 50/593

(54) **CYLINDRICAL BATTERY GASKET, AND CYLINDRICAL BATTERY PROVIDED WITH SAID GASKET**

(30) Priority: 05.09.2022 JP 2022140723
(71) Applicant: FDK Corporation, Tokyo 108-8212 (JP)
(72) Inventor: NOMURA, FUMIHIRO, Tokyo 108-8212 (JP)
(74) Representative: Becker, Eberhard
(86) International application number: PCT/JP2023/027320
(87) International publication number: WO 2024/053272

(57) **Abstract**

A cylindrical battery gasket (32) has insulation properties and is to be fitted with a sealing body (24) for sealing an opening of a bottomed exterior can (10) for a cylindrical battery. The gasket has a bottom part, and a cylindrical circumferential wall rising upwardly from a peripheral portion of the bottom part. An inclined surface (32A) is provided to the entire circumference of the outer circumference portion of the gasket in a manner such that the outer diameter of the circumferential wall increases upward and becomes larger than the inner diameter of an opening end part (10A) of the exterior can. The circumferential wall has a shape in which the thickness of the wall gradually increases toward the upper portion of the wall.

## Description

### Technical Field

The present disclosure relates to a cylindrical battery gasket and a cylindrical battery provided with said gasket.

### Background Art

In recent years, nickel hydrogen batteries have been used in various fields as representative cylindrical secondary batteries. In nickel hydrogen batteries, it is common to have a configuration where a sealing body with a safety valve is configured at the opening end of a cylindrical bottomed exterior can through an insulating gasket, and then the exterior can is crimped to close the opening end with the sealing body. Further, in the battery manufacturing process, it has become mainstream for the sealing body to be fitted into the gasket in advance, and then configured at the opening end of the battery can together with the gasket.

### Citation List

### Patent Document

Patent Document 1: Japanese Patent Application Laid-Open Publication No. 2010-40407.

### SUMMARY

The cylindrical battery gasket of the present disclosure is a cylindrical battery gasket having insulation properties and to be fitted with a sealing body for sealing an opening of a bottomed exterior can for a cylindrical battery. The gasket comprises a bottom portion and a cylindrical circumferential wall rising upward from a peripheral portion of the bottom portion, and an inclined surface that expands an outer diameter of the circumferential wall to be larger than an inner diameter of an opening end portion of the exterior can toward an upward direction is provided around an entire outer circumference portion of the gasket, and the circumferential wall is shaped such that a wall thickness gradually increases toward an upper portion.

### DESCRIPTION OF EMBODIMENTS

[FIG. 1] FIG. 1 is a longitudinal cross-sectional view showing the cylindrical battery according to one embodiment.
[FIG. 2] FIG. 2 is a schematic diagram showing the cylindrical battery gasket and the exterior can of the cylindrical battery according to one embodiment.
[FIG. 3] FIG. 3 is a schematic diagram showing the state where the gasket is configured at the battery can opening end in the initial stage of the crimping process.
[FIG. 4] FIG. 4 is a schematic diagram showing the gasket and the exterior can in the crimped state.
[FIG. 5A] FIG. 5A is a schematic diagram for describing the insulation ring with improvements.
[FIG. 5B] FIG. 5B is a schematic diagram for describing an insulation ring with improvements.
[FIG. 6] FIG. 6 is a schematic diagram for describing a conventional gasket.

### DESCRIPTION OF EMBODIMENTS

In the following description, the gasket according to the present embodiment and the battery using the same will be described with reference to the attached drawings. It should be noted that the attached drawings may partially emphasize, enlarge, reduce, or omit parts to deepen understanding, and may not accurately represent the scale or shape of each component. Further, in the attached drawings, the length of each component or the position where each component is configured may be changed for ease of understanding.

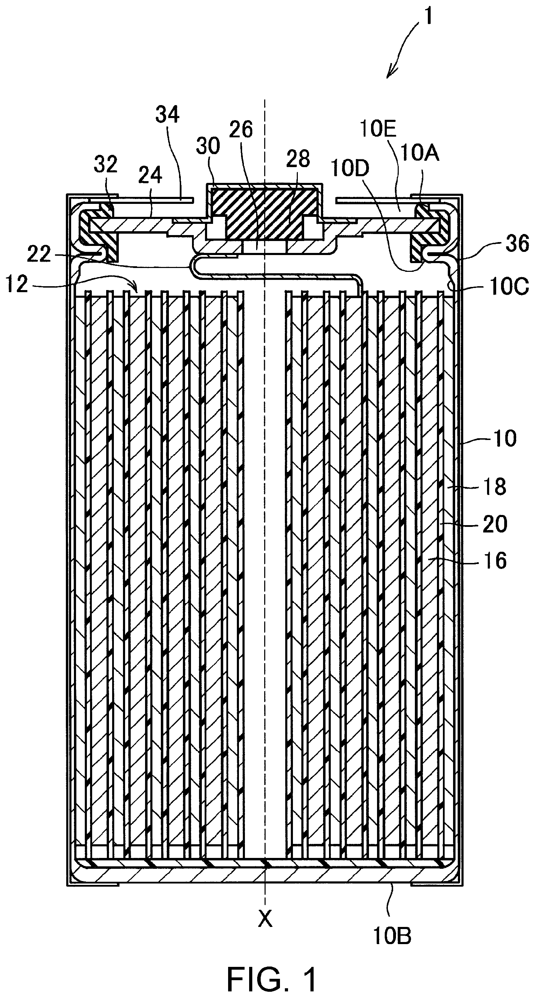

FIG. 1 shows a nickel hydrogen secondary battery 1 as a cylindrical battery according to one embodiment of the present disclosure.

The battery 1 is, for example, an AA-size cylindrical battery with a height of 50.5 mm and an outer diameter of 14.5 mm, and includes an exterior can 10 having a bottomed cylindrical shape with one end open. The exterior can 10 is formed into a bottomed cylindrical shape by multi-stage pressing of nickel-plated steel sheet, with one end becoming an opening end portion 10A and the other end becoming a closed bottom portion 10B. Further, the outer surface of the bottom portion 10B, which serves as the bottom wall of the exterior can 10, functions as a conductive negative terminal.

Inside the exterior can 10, a substantially cylindrical electrode group 12 is accommodated along with an alkaline electrolyte (not shown). The electrode group 12 consists of strip-shaped positive electrode plate 16, negative electrode plate 18, and separator 20. The separator 20 is sandwiched between the positive electrode plate 16 and the negative electrode plate 18. The positive electrode plate 16, the negative electrode plate 18, and the separator 20 are wound in a spiral shape. A part of the negative electrode plate 18 is positioned at the outermost circumference portion of the electrode group 12. The negative electrode plate 18 is electrically connected to the exterior can 10 by the negative electrode plate 18 at this outermost circumference portion contacting the inner circumferential surface 10C of the exterior can 10.

The positive electrode plate 16 is a strip-shaped electrode filled with positive electrode active material. On the other hand, the negative electrode plate 18 is a strip-shaped electrode made of hydrogen storage alloy. Further, the separator 20 is, for example, made of polyolefin fiber nonwoven fabric with added hydrophilic groups. As the alkaline electrolyte, for example, an aqueous solution of potassium hydroxide, an aqueous solution of lithium hydroxide, an aqueous solution of sodium hydroxide, or a mixture of these solutions is used.

One end of a current collecting tab 22 is electrically connected to the positive electrode plate 16 near the opening end portion 10A of the exterior can 10. The other end of the current collecting tab 22 is electrically connected to a conductive circular sealing plate 24. The sealing plate 24, serving as a sealing body, has a gas release hole 26 in the center. A rubber valve body 28 is configured on the outer surface of the sealing plate 24 to cover this gas release hole 26. Furthermore, a flanged cylindrical positive terminal 30 is fixed on the outer surface of the sealing plate 24, covering the valve body 28. This positive terminal 30 presses the valve body 28 against the sealing plate 24. The length (for example, the length in the horizontal direction) of the positive terminal 30 may be shorter or longer than shown in the figure. Thus, the positive terminal 30 may or may not be sandwiched between the sealing plate 24 and the gasket 32. Further, the positive terminal 30 may be configured so as to be embedded in the sealing plate 24 or may be configured on the upper surface of the sealing plate 24.

The gas release hole 26 is normally hermetically sealed by the valve body 28. On the other hand, in the case of abnormal gas generation inside the exterior can 10 and increased internal pressure, the valve body 28 is compressed, causing the gas release hole 26 to communicate with the outside, allowing gas to be released from the exterior can 10. In this way, the sealing plate 24, the valve body 28, and the positive terminal 30 form a safety valve.

The sealing plate 24 is configured on the opening end portion 10A side of the exterior can 10. A gasket 32 made of insulating material is sandwiched between the outer circumference portion of the sealing plate 24 and the inner circumferential surface 10C of the exterior can 10. The insulating material is, for example, fluororesin such as PTFE, PFA, FEP, or nylon resin (polyamide). The sealing plate 24 and the gasket 32 are fixed to the opening end portion 10A of the exterior can 10 and close the opening end portion 10A by crimping the portion of the exterior can 10 on the opening end portion 10A side towards the sealing plate 24. Crimping is a method of fixing one part to another part by deforming a portion of the parts. The gasket 32 prevents short circuit between the sealing plate 24 connected to the positive terminal 30 and the exterior can 10 serving as the negative terminal by being electrically connected to the negative electrode plate 18. Further, the gasket 32 prevents electrolyte leakage from the exterior can 10.

The exterior can 10 has a sealing plate receiving portion 10D formed on the inner circumferential surface 10C, slightly closer to the bottom portion 10B than the opening end portion 10A, which protrudes from the inner circumferential surface 10C toward the center axis X of the battery, reducing the inner diameter, and extends in the circumferential direction. This sealing plate receiving portion 10D is the part where the sealing plate 24, inserted from the opening end portion 10A of the exterior can 10, is configured inside the exterior can 10 via the gasket 32.

Further, the metal exterior can 10 is covered and insulated by an exterior label 36 made of heat-shrinkable material on the peripheral part around the edge of the opening area 10E, the outer surface of the circumferential wall of the exterior can, and the peripheral part around the edge of the bottom portion 10B. It is noted that the opening area 10E is formed by the crimped opening end portion 10A and is a circular area where the positive terminal 30 protrudes externally. A donut-shaped (ring-shaped) flat insulation ring 34 is configured between the peripheral part around the edge of the opening area 10E and the exterior label 36. The insulation ring 34 is intended to prevent short circuits in the battery 1, especially to prevent short circuits between the positive terminal 30 and the exterior can 10. This insulation ring 34 is made of, for example, insulating materials such as cellulose fiber or polypropylene resin.

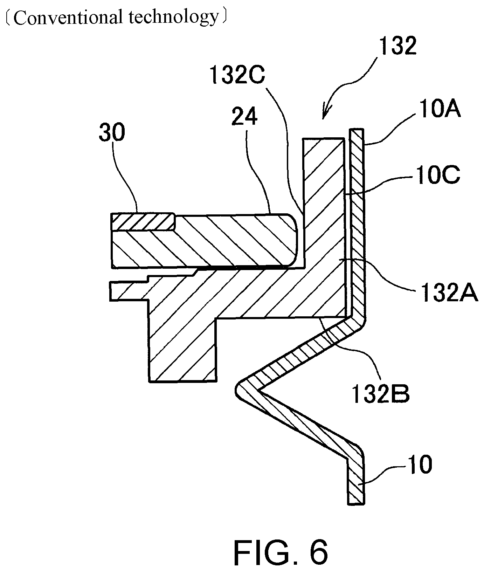

Incidentally, as can be seen from FIG. 6, the conventional gasket has a cylindrical portion similar in shape to the exterior can 10. The outer circumferential surface 132A of this conventional gasket 132 extends vertically upward from the peripheral portion of the bottom portion 132B of the gasket 132, so as to be parallel to the inner circumferential surface 10C on the opening end portion 10A side of the exterior can 10 during insertion. Further, the sealing body 24, which is inserted into the exterior can 10 together with this gasket 132, has the outer circumferential surface formed into a cylindrical shape. Then, the inner circumferential surface 132C of the gasket 132, into which the sealing body 24 is fitted, also has a cylindrical surface. In this case, after inserting the sealing plate 24, which has been fitted into the gasket 132 in advance, into the opening end portion 10A of the exterior can 10 together with the gasket 132, and then crimping the opening end portion 10A, problems may occur when the gasket 132 deforms due to this crimping, as mentioned earlier. Specifically, during this deformation, when the upper part of the circumferential wall of the gasket 132 bends in the direction of the center axis of the battery, the sealing plate 24 may float up and shift from the pre-fitted position in the gasket 132, or may come off from the gasket, which becomes problematic.

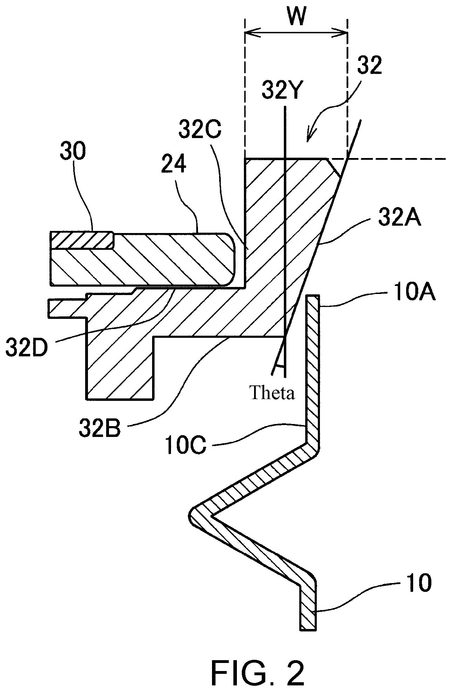

The gasket 32 according to the present embodiment shown in FIG. 2 addresses this problem. As can be seen from FIG. 2, in this gasket 32, an outer circumferential surface 32A serving as an inclined surface that gradually expands the outer diameter of the circumferential wall of the gasket toward and upward direction to be larger than the inner diameter of the opening end portion 10A of the exterior can 10 is provided around the entire outer circumference portion of the gasket 32. Specifically, in the case where an imaginary outer circumferential surface corresponding to the outer circumferential surface of the conventional gasket 132 is considered as a reference plane 32Y, the outer circumferential surface 32A of the gasket 32 according to the present embodiment has an inclination with an angle Theta formed between a line along the outer circumferential surface 32A and a line along the reference plane 32Y. Then, the inclination provided by the outer circumferential surface 32A is inclined to expand the outer circumference portion of the gasket 32 toward an upward direction. In other words, the inclination provided by the outer circumferential surface 32A is inclined such that the upper portion side faces radially outward with respect to the reference plane 32Y. That is, the outer circumferential surface 32A extends upward from the peripheral portion of the bottom portion 32B of the gasket 32 while being inclined radially outward at an angle Theta. Further, in this case, the circumferential wall of the gasket 32 is shaped such that the wall thickness gradually increases toward the upper portion until it reaches a width W at the upper end portion of the gasket.

The following description briefly describes the manufacturing of the battery 1 using the gasket 32 according to the present embodiment.
As shown in FIG. 1, the battery 1 is manufactured by inserting the electrode group 12 into the interior from the opening end portion 10A of the exterior can 10, welding one end of the current collecting tab 22 to a predetermined position of the positive plate 16, and injecting the alkaline electrolyte into the exterior can 10.

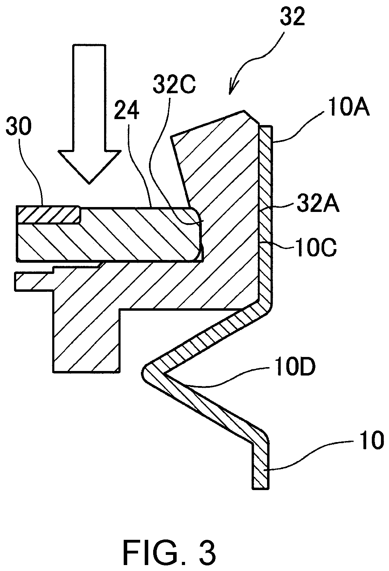

The gasket 32, as shown in FIG. 2, is configured with the sealing plate 24 pre-fitted in the space defined by the inner circumferential surface 32C such that the sealing plate 24 is in contact with the seat portion 32D of the gasket 32. Further, as shown in FIG. 3, the gasket 32 is pushed into the exterior can 10 from the opening end portion 10A toward the bottom portion 10B. As the gasket 32 is pushed into the exterior can 10, the diameter expands toward the upper portion thereof, and the outer circumferential surface 32A of the outer circumference portion, which is inclined to face radially outward, becomes parallel to the inner circumferential surface 10C of the opening end portion 10A and comes into contact with the inner circumferential surface 10C. At this time, the thickened part of the upper portion of the gasket 32 deforms by bending radially inward toward the center axis X of the battery. Due to this deformation, the sealing plate 24 is fixed in a state where it is tightly adhered to the inner circumferential surface 32C of the gasket 32, with the outer peripheral part being wrapped by the inner circumferential surface 32C. Afterwards, the sealing plate 24, together with the gasket 32, is further pushed toward the bottom portion 10B side in this fixed state and is configured above the constricted part forming the sealing plate receiving portion 10D. At this time, the other end of the current collecting tab 22 is connected to the sealing plate 24. It is sufficient for at least a part of the current collecting tab 22 to be connected to the sealing plate 24. Thus, the current collecting tab 22 may be configured on the lower surface of the sealing plate 24 straddling the gas release hole 26, or it may be configured on the lower surface of the sealing plate 24 without straddling the gas release hole 26.

Next, in order to fix the sealing plate 24 by crimping, the edge portion of the opening end portion 10A of the exterior can 10 is bent toward the center axis X of the battery by a jig, together with the thickened opening end portion of the gasket 32. At this time, when the sealing plate 24 is configured at the opening end of the battery can together with the gasket 32 as described above, it is already fixed tightly to the inner circumferential surface 32C of the gasket 32, with the outer peripheral part being wrapped by the inner circumferential surface 32C. Thus, when crimping the exterior can 10, the gasket 32 acts to prevent the sealing plate 24 from shifting from the pre-fitted position or detaching from the gasket 32.

In this manner, in the present embodiment, when crimping the exterior can 10, since the positional shift or detachment of the sealing plate 24 from the gasket 32, in other words, the movement of the sealing plate 24 relative to the gasket 32, is suppressed, it is possible to suppress the contact between the sealing plate 24 and the exterior can 10, that is, the short circuit of the electrodes. Further, in this case, since the sealing plate 24 is fixed at the predetermined position relative to the exterior can 10, it is also possible to suppress the occurrence of external appearance defects of the battery 1.
Afterwards, the sealing plate receiving portion 10D is formed by the part of the exterior can 10 that has been previously constricted to reduce the inner diameter. Further, to sufficiently crimp the exterior can 10, pressure is applied to the exterior can 10 in the direction of the center axis X.

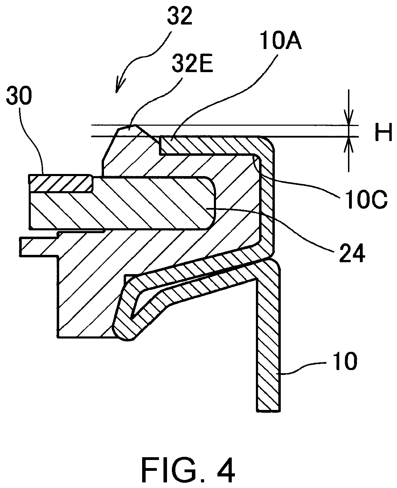

FIG. 4 shows the exterior can 10 after crimping the exterior can 10 and sealing the opening end portion 10A with the sealing plate 24.
After the crimping process is performed as described above, the thickened part of the gasket 32, which has been compressed by crimping, extends from between the opening end portion 10A of the exterior can 10 and the sealing plate 24 toward the side of the positive terminal 30, and the extended part protrudes upward to form a protruding portion 32E.
In this manner, in the present embodiment, after the exterior can 10 is crimped, the thickened part of the outer circumference portion of the gasket 32, which has been compressed by crimping and is thicker than conventional gaskets, seals between the inner circumferential surface 10C of the opening end portion 10A of the exterior can 10 and the sealing plate 24. In this case, since gaps are less likely to occur around the gasket 32, especially between the gasket 32 and the inner circumferential surface 10C of the opening end portion 10A, and the airtightness between the upper portion of the gasket 32 and the end portion of the exterior can is improved, in the present embodiment, it is possible to suppress the occurrence of electrolyte leakage.

Further, the protruding portion 32E of the gasket 32 formed by crimping is also useful in suppressing contact between the sealing plate 24 and the exterior can 10, that is, short circuit of the electrodes. It should be noted that, in relation to attaching the insulation ring 34 to the exterior can 10, the height "H" of the protruding portion 32E from the surface of the upper end portion of the exterior can 10 after crimping, which serves as a reference surface, needs to be "1 mm or less", and particularly preferably in the range of "0.01 to 1.00 mm". This is because if the height "H" of the protruding portion 32E "exceeds 1 mm", there is a possibility of an insertion defect of the insulation ring 34 into the exterior can 10 due to the presence of the protruding portion 32E. However, depending on the shape of the exterior can and the shape of the insulation ring, etc., the height H may be "1.01 mm or more".

Next, to prevent short circuit of the electrodes, the insulation ring 34 is attached to the exterior can 10. Specifically, in the exterior can 10, a circular opening area 10E, through which the positive terminal 30 protrudes to the outside, is formed by the opening end portion 10A after crimping. Then, a donut-shaped flat insulation ring 34 is configured on the peripheral part around the edge of this opening area 10E to cover the opening area. Then, the insulation ring 34 configured in this manner is fixed to the upper surface of the peripheral part around the edge of the opening area 10E. This completes the attachment of the insulation ring 34. It is noted that at this time, the protruding portion 32E of the gasket 32 protrudes upward from the edge part of the opening area 10E. As a result of this attachment, the protruding portion 32E comes into contact with the lower surface of the insulation ring 34.
Subsequently, especially for insulation purposes, the peripheral part around the edge of the opening area 10E of the exterior can 10, the outer surface of the circumferential wall, and the peripheral part around the edge of the bottom portion 10B are covered with an exterior label 36. At this time, the covering of the peripheral part around the edge of the opening area 10E is performed by sandwiching the insulation ring 34 between the peripheral part around the edge and the exterior label 36.

In the following description, to observe the difference in the occurrence of manufacturing defects, 10,000 AA-size cylindrical batteries were manufactured as examples using the gasket of the above-mentioned embodiment and a conventional gasket, respectively, and the differences therebetween were compared. For verification, both the gasket of the above-mentioned embodiment and the conventional gasket were made of nylon resin with 0.2% carbon black added. The items of manufacturing defects examined for differences were "crimping short circuit defect" due to gasket detachment, "gasket misalignment (not short-circuited)" by visual inspection, and "electrolyte leakage". All examinations were conducted using batteries in a bare state (not covered with an exterior label 36) after crimping the exterior can 10. For electrolyte leakage, a high-temperature cycle test for leakage verification was conducted until the end of life, and the number of leakages due to the sealing properties of the gasket was investigated.
It is noted that, for the gasket of the above-mentioned embodiment, to observe the differences in cases where the angle Theta of the inclination of the outer circumferential surface differs, cylindrical batteries were manufactured and compared using gaskets with three different angles Theta. The angle Theta was set to "5 degrees" in the first example 1, "15 degrees" in the second example 2, and "25 degrees" in the third example 3.

Further, to observe the occurrence of insertion defects of the insulation ring due to the height H of the protruding portion of the gasket in the above-mentioned embodiment, as a comparative example, cylindrical batteries were also manufactured and compared using a gasket with an angle Theta of "30 degrees". As shown in Table 1, for example, in the case of a gasket with an angle Theta of "30 degrees", the width W of the upper end portion of the gasket becomes "1.60mm", and in the gasket after crimping the exterior can, a protruding portion with a height of "1.20mm" is formed. Also, for example, in the cases where the angle Theta is "5 degrees", "15 degrees", and "25 degrees", the width W of the upper end portion of the gasket becomes "0.62mm", "0.98mm", and "1.38mm", respectively. Then, in the gasket after crimping the exterior can, protruding portions with heights of "0.01mm", "0.50mm", and "1.00mm", respectively, are formed.
It should be noted that the conventional gasket has an angle Theta of "0 degrees" as it does not have an inclination on the outer circumference portion, and the width W of the upper end portion of the gasket is "0.45mm". In this case, since no protruding portion is formed, the height H is "0.00mm". The comparative example is not a conventional technology, and may be applied to nickel hydrogen secondary batteries or gaskets.

**[Table 1]**

| | Angle Theta (degree) | Width W of the upper end portion of the gasket (mm) | Height H of the protruding portion of the gasket (mm) | Crimping short circuit defect | Gasket misalignment | Electrolyte leakage | Insertion defect of the insulation ring |
|---|---|---|---|---|---|---|---|
| Conventional | 0 | 0.45 | 0.00 | 1 | 20 | 10 | 0 |
| Example 1 | 5 | 0.62 | 0.01 | 0 | 0 | 0 | 0 |
| Example 2 | 15 | 0.98 | 0.50 | 0 | 0 | 0 | 0 |
| Example 3 | 25 | 1.38 | 1.00 | 0 | 0 | 0 | 0 |
| Comparative Example | 30 | 1.60 | 1.20 | 0 | 0 | 0 | 12 |

As can be understood from Table 1, in the case of using a conventional gasket, manufacturing defects occurred in the batteries, such as "1" crimping short circuit defect, "20" gasket misalignments, and "10" electrolyte leakages out of 10,000 batteries. On the other hand, in the case of using the gaskets of examples 1 to 3, no manufacturing defects such as crimping short circuit defects, gasket misalignments, and electrolyte leakages occurred at all in the manufacturing of 10,000 batteries. In this way, by expanding the outer diameter of the gasket to be larger than the inner diameter of the exterior can towards the upper portion, and providing an inclination on the outer circumference portion of the gasket where the thickness of the circumferential wall gradually increases towards the upper portion, it becomes possible to manufacture higher quality batteries.
It should be noted that in the case of using the gasket of the comparative example shown in Table 1, that is, with an angle Theta of "30 degrees" and a height H of "1.20mm", insertion defects of the insulation ring occurred in "12" batteries out of 10,000. On the other hand, in the case of using the gaskets of examples 1 to 3, that is, with an angle Theta of "5 to 25 degrees" and a height H of "0.01 to 1.00mm", no insertion defects of the insulation ring occurred at all in the manufacturing of 10,000 batteries. From this result, it is considered that in the case of using the gasket of the above-mentioned embodiment, in order to prevent the occurrence of insertion defects of the insulation ring into the exterior can, it is preferable to set the height H of the protruding portion within the range of "0.01 to 1.00mm".
It is noted that, as can be understood from Table 1, even in the case of using the gasket of the comparative example, no manufacturing defects such as crimping short circuit defects, gasket misalignments, and electrolyte leakages occurred at all in the manufacturing of 10,000 batteries.

Incidentally, from the viewpoint of suppressing the occurrence of electrolyte leakage, it is desirable to increase the thickness (thicken) of the circumferential wall of the upper portion of the gasket within a certain range. By doing so, the deformation of the gasket due to the crimping of the exterior can may increase the airtightness around the gasket, especially between the gasket and the inner circumferential surface of the exterior can, thereby suppressing the occurrence of electrolyte leakage. However, as mentioned above, if the thickness of the circumferential wall of the upper portion of the gasket is increased, insertion defects of the insulation ring occur because the height H of the protruding portion becomes higher.

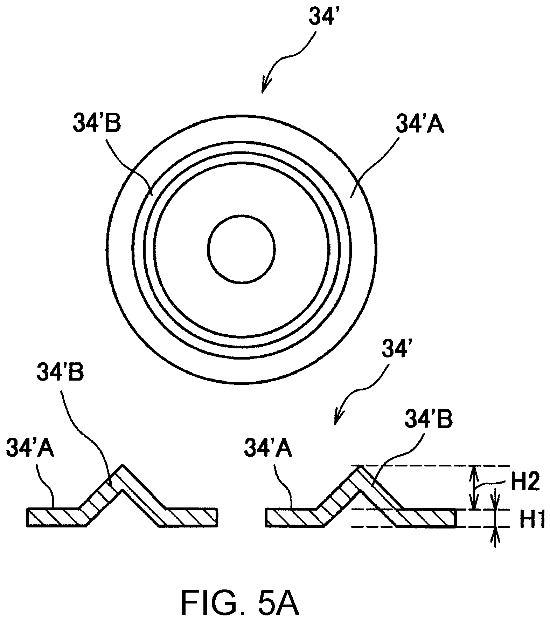

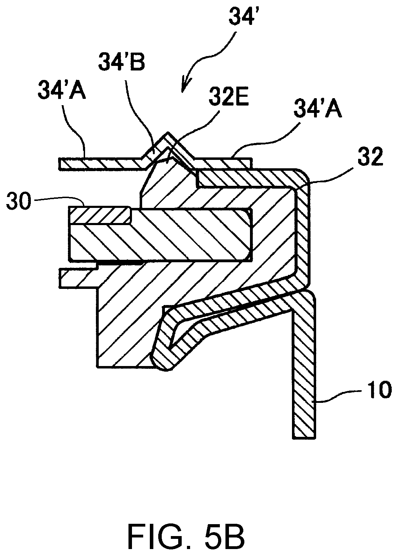

Thus, the inventors devised an improvement to the insulation ring in order to suppress the occurrence of insertion defects of the insulation ring while increasing the thickness of the circumferential wall of the upper portion of the gasket. FIG. 5A and FIG. 5B show the improved insulation ring 34'. The improved insulation ring 34' may or may not be applied to the embodiment.
As shown in FIG. 5A, in comparison with a conventional donut-shaped (ring-shaped) flat insulation ring, an insulation ring 34' is provided with a mountain-like convex portion 34'B that rises like a mountain on the upper surface side of the flat ring-shaped portion 34'A. This mountain-like convex portion 34'B is formed such that when the height (thickness) of the ring-shaped portion 34'A of the insulation ring 34' is H1, the height from the upper surface of the ring-shaped portion 34'A to the top portion of the convex portion 34'B is H2. It is noted that the upper figure in FIG. 5A is a schematic diagram of the insulation ring 34' viewed from its upper side. Further, the lower figure in FIG. 5A is a longitudinal cross-sectional view of the insulation ring 34' when viewed from its side.
The mountain-like convex portion 34'B extends along the entire circumference of the ring-shaped portion 34'A of the insulation ring 34'. Then, on the lower surface side of the ring-shaped portion 34'A of the insulation ring 34', a concave portion, which is a space formed in an upwardly valley-like shape is provided in a part corresponding to the rear surface side of the convex portion 34'B. The improved insulation ring 34' is configured to accept the protruding portion 32E of the gasket 32 by means of this concave portion. Thus, as shown in FIG. 5B, in order to enable the mountain-like convex portion 34'B to accept the protruding portion 32E of the gasket 32 in the concave portion on the lower surface side, it is configured in a position that ensures positional alignment with the protruding portion 32E in the radial direction of the ring-shaped portion 34'A of the insulation ring.

In the following description, to observe the difference in the occurrence of insertion defects of the insulation ring when using the above-mentioned improved insulation ring and the conventional insulation ring, 10,000 AA-size cylindrical batteries were manufactured as examples for each case, and their differences were compared. In this case, insulation rings made of cellulose fiber were used for both. Further, for the improved insulation ring, one with heights H1 and H2 of "0.25mm" and "0.50mm", respectively, was used.
The examples compared three cases where the height H of the protruding portion was varied by changing the thickness of the circumferential wall of the upper portion of the gasket. Specifically, as mentioned above, the comparative example where insertion defects occurred when using the conventional insulation ring, i.e., the case using a gasket with an angle Theta of "30 degrees", was adopted as the first example. Furthermore, new cases using gaskets with angles Theta of "40 degrees" and "45 degrees" were added as Example 4 and Example 5, respectively, and comparisons were made among these three examples: "Comparative Example", "Example 4", and "Example 5".
As shown again in Table 2, in the case of the comparative example using a gasket with an angle Theta of "30 degrees", the width W of the upper end portion of the gasket is "1.60mm", and in the gasket after crimping the exterior can, a protruding portion with a height of "1.20mm" was formed. Further, in Example 4, which used a gasket with an angle Theta of "40 degrees," and Example 5, which used a gasket with an angle Theta of "45 degrees," for the new cases, the width W of the upper end portion of the gasket was "2.05 mm" and "2.50 mm," respectively. Then, in the gasket after crimping the exterior can, protruding portions with heights of "1.80mm" and "2.00mm", respectively, were formed.

**[Table 2]**

| | Angle Theta (degree) | Width W of the upper end portion of the gasket (mm) | Height H of the protruding portion of the gasket (mm) | Crimping short circuit defect | Gasket misalignment | Electrolyte leakage | Insertion defect of the insulation ring (conventional) | Insertion defect of the insulation ring (improved) |
|---|---|---|---|---|---|---|---|---|
| Comparative Example | 30 | 1.60 | 1.20 | 0 | 0 | 0 | 12 | 0 |
| Example 4 | 40 | 2.05 | 1.80 | 0 | 0 | 0 | 30 | 0 |
| Example 5 | 45 | 2.50 | 2.00 | 0 | 0 | 0 | 34 | 10 |

As can be seen from Table 2, in the case of the comparative example, as mentioned above, when using the conventional insulation ring, insertion defects of the insulation ring occurred in "12" out of 10,000 batteries. On the other hand, in the case of the comparative example, when using the newly improved insulation ring, no insertion defects of the insulation ring occurred at all in the manufacture of 10,000 batteries. Further, in the cases of the new Example 4 and Example 5, when using the conventional insulation ring, insertion defects of the insulation ring occurred in "30" and "34" batteries out of 10,000 batteries, respectively. On the other hand, in the case of Example 4, when using the improved insulation ring, no insertion defects of the insulation ring occurred at all in the manufacture of 10,000 batteries. However, in the case of Example 5, when using the improved insulation ring, insertion defects of the insulation ring occurred in "10" out of 10,000 batteries.
From these results, it is considered that when using the improved insulation ring, if the height H of the protruding portion of the gasket is within the range of "0.01 to 1.80mm", the occurrence of insertion defects of the insulation ring into the exterior can may be suppressed. In this case, since the angle Theta is expanded to the range of "5 to 40 degrees", and the width W of the upper end portion of the gasket is expanded to the range of "0.62 to 2.05mm", it becomes possible to increase the thickness of the circumferential wall of the upper portion of the gasket more than when using the conventional insulation ring. It is noted that, depending on the shape of the exterior can and the shape of the insulation ring, etc., the height H may be "1.81mm or more", the angle Theta may be "1 to 4 degrees, 41 degrees or more", and the width W of the upper end portion of the gasket may be "0.01 to 0.61, 2.06mm or more".
In this way, by using the improved insulation ring, it is possible to increase the thickness of the circumferential wall of the upper portion of the gasket while suppressing the occurrence of insertion defects of the insulation ring. Therefore, if the improved insulation ring is used in combination with the gasket of the above-mentioned embodiment, it becomes possible to increase the thickness of the circumferential wall of the upper portion of the gasket, so compared to using the conventional insulation ring, the occurrence of electrolyte leakage may be suppressed.
It is noted that, as can be seen from Table 2, even in the case of using the gaskets of Example 4 and Example 5, manufacturing defects such as crimping short circuit defects, gasket misalignment, and electrolyte leakage did not occur at all in the manufacture of 10,000 batteries.

### [Exemplary issues of the present disclosure]

The sealing body is formed with a cylindrical outer circumferential surface, and the inner circumferential surface of the gasket into which the sealing body is fitted also has a cylindrical surface similarly. Further, the gasket is made cylindrical in shape for ease of insertion into the exterior can. In this configuration, during the crimping process when the exterior can is crimped and the gasket deforms, the sealing body may float up and shift from the pre-fitted position of the gasket, or sometimes detach from the gasket. As a result, in the completed battery, short circuits or appearance defects may occur, or electrolyte leakage may occur from the gap created around the gasket, especially between the gasket and the inner circumferential surface of the exterior can.

In view of the above-mentioned problems, an exemplary issue of the present disclosure is to provide a cylindrical battery gasket and a cylindrical battery provided with the gasket that may suppress the movement of the sealing body relative to the gasket when crimping the exterior can.

### [Exemplary content of the present disclosure]

The first disclosure is a gasket, which is a cylindrical battery gasket having insulation properties and to be fitted with a sealing body for sealing an opening of a bottomed exterior can for a cylindrical battery, wherein the gasket comprises a bottom portion and a cylindrical circumferential wall rising upward from a peripheral portion of the bottom portion, and an inclined surface that expands an outer diameter of the circumferential wall to be larger than an inner diameter of an opening end portion of the exterior can toward an upward direction is provided around an entire outer circumference portion of the gasket, and the circumferential wall is shaped such that a wall thickness gradually increases toward an upper portion.

The second disclosure is a cylindrical battery, comprising: an exterior can, which is a cylindrical exterior can including an opening end portion opened as one end in an axial direction of the exterior can, and a bottom portion closed as other end in the axial direction, capable of accommodating an electrode group and an electrolyte inside; a circular sealing body, configured to seal an opening end portion of the exterior can; and a gasket according to claim 1, which is configured between an inner circumferential surface of the exterior can and the sealing body at an opening end portion of the exterior can, wherein the gasket is inserted into an opening end portion of the exterior can with the sealing body fitted, and in the exterior can after the opening end portion is crimped, a part of the gasket forms a protruding portion that protrudes upward from a portion of an edge of a circular opening area formed by the opening end portion after being crimped, and at a peripheral part around an edge of the opening area, a ring-shaped flat insulation ring is configured to cover the opening area and fixed to an upper surface of the peripheral part.

The third disclosure is a cylindrical battery according to the second disclosure, wherein with a surface of an upper end portion of the exterior can after crimping is taken as a reference surface, a protruding portion of the gasket protrudes from the reference surface by a height in the range of 0.01 mm to 1.00 mm.

The fourth disclosure is a cylindrical battery according to the second disclosure, wherein on an upper surface side of a flat ring-shaped portion, the insulation ring is provided with a mountain fold-like convex portion extending around an entire circumference of a ring-shaped portion, and on a lower surface side of the ring-shaped portion at a part corresponding to a back surface side of the convex portion, a valley fold-like concave portion formed toward an upward direction is provided, the insulation ring is configured to accept a protruding portion of the gasket by the concave portion when configured to cover the opening area, and with a surface of an upper end portion of the exterior can after crimping is taken as a reference surface, a protruding portion of the gasket protrudes so as to have a height from the reference surface higher than a case in which the convex portion and the concave portion are not provided on a ring-shaped portion of the insulation ring.

### [Exemplary effects of the present disclosure]

According to the cylindrical battery gasket and the cylindrical battery provided with the gasket of the present disclosure, it becomes possible to suppress the movement of the sealing body relative to the gasket when crimping the exterior can.

### Reference Signs List

1 Battery
10 Exterior can
10A Opening end portion
10B Bottom portion
10C Inner circumferential surface
24 Sealing plate (Sealing body)
32 Gasket
32A Outer circumferential surface (Inclined surface)
32B Bottom portion
32C Inner circumferential surface
32D Seat portion
32E Protruding portion
32Y Reference plane (imaginary outer circumferential surface)
34 Insulation ring (conventional)
34' Insulation ring (with improvements)
34'A Ring-shaped portion
34'B Mountain fold-like convex portion
H Height of the protruding portion
Theta Angle (inclination angle, inclination)
W Width of the upper end portion of the gasket
X Center axis of the battery

## Claims

1. A gasket, which is a cylindrical battery gasket having insulation properties and to be fitted with a sealing body for sealing an opening of a bottomed exterior can for a cylindrical battery, wherein
the gasket comprises a bottom portion and a cylindrical circumferential wall rising upward from a peripheral portion of the bottom portion, and an inclined surface that expands an outer diameter of the circumferential wall to be larger than an inner diameter of an opening end portion of the exterior can toward an upward direction is provided around an entire outer circumference portion of the gasket, and
the circumferential wall is shaped such that a wall thickness gradually increases toward an upper portion.

2. A cylindrical battery, comprising:
an exterior can, which is a cylindrical exterior can including an opening end portion opened as one end in an axial direction of the exterior can, and a bottom portion closed as other end in the axial direction, capable of accommodating an electrode group and an electrolyte inside;
a circular sealing body, configured to seal an opening end portion of the exterior can; and
a gasket according to claim 1, which is configured between an inner circumferential surface of the exterior can and the sealing body at an opening end portion of the exterior can,
wherein the gasket is inserted into an opening end portion of the exterior can with the sealing body fitted, and in the exterior can after the opening end portion is crimped, a part of the gasket forms a protruding portion that protrudes upward from a portion of an edge of a circular opening area formed by the opening end portion after being crimped, and
at a peripheral part around an edge of the opening area, a ring-shaped flat insulation ring is configured to cover the opening area and fixed to an upper surface of the peripheral part.

3. The cylindrical battery according to claim 2, wherein
with a surface of an upper end portion of the exterior can after crimping is taken as a reference surface, a protruding portion of the gasket protrudes from the reference surface by a height in a range of 0.01 mm to 1.00 mm.

4. The cylindrical battery according to claim 2, wherein
on an upper surface side of a flat ring-shaped portion, the insulation ring is provided with a mountain fold-like convex portion extending around an entire circumference of a ring-shaped portion, and on a lower surface side of the ring-shaped portion at a part corresponding to a back surface side of the convex portion, a valley fold-like concave portion formed toward an upward direction is provided,
the insulation ring is configured to accept a protruding portion of the gasket by the concave portion when configured to cover the opening area, and
with a surface of an upper end portion of the exterior can after crimping is taken as a reference surface, a protruding portion of the gasket protrudes so as to have a height from the reference surface higher than a case in which the convex portion and the concave portion are not provided on a ring-shaped portion of the insulation ring.
